# EUROPEAN PATENT APPLICATION

(11) **EP 4 641 958 A1**
(43) Date of publication of application: **29.10.2025**
(21) Application number: 23907664.9
(22) Date of filing: 18.12.2023
(51) Int. Cl.: H04L 1/00, H04W 88/04, H04L 1/16, H04W 74/08, H04W 84/12

(54) **METHOD AND DEVICE FOR PERFORMING RELAY TRANSMISSION DURING TRIGGERED TRANSMISSION OPPORTUNITY IN WIRELESS LAN SYSTEM**

(30) Priority: 19.12.2022 KR 20220178449
(71) Applicant: LG Electronics Inc., Yeongdeungpo-gu Seoul 07336 (KR)
(72) Inventor: JANG, Insun, Seoul 06772 (KR); CHOI, Jinsoo, Seoul 06772 (KR); LIM, Dongguk, Seoul 06772 (KR); BAEK, Sunhee, Seoul 06772 (KR)
(74) Representative: Plasseraud IP
(86) International application number: PCT/KR2023/020913
(87) International publication number: WO 2024/136379

(57) **Abstract**

A method and a device for performing relay transmission during a triggered transmission opportunity in a wireless LAN system are disclosed. The method performed by means of a first station (STA) in a wireless LAN system, according to one embodiment of the present disclosure, comprises the steps of: receiving, from an access point (AP), a first A-MPDU including data to be transmitted to a second STA; transmitting, to the AP, an ACK frame for the first A-MPDU; and transmitting, to the second STA, a second A-MPDU including the data. Here, the ACK frame includes ACK information indicating whether to identify at least one MAC header included in the first A-MPDU, and the ACK information can be based on an ACK policy indicated by an ACK-policy-related field included in the first A-MPDU and at least one other field.

## Description

### [TECHNICAL FIELD]

The present disclosure relates to a method and apparatus for performing relay transmission at a triggered transmission opportunity (triggered TXOP) in a Wireless Local Area Network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

A technical object of the present disclosure is to provide a method and device for performing relay transmission at a triggered transmission opportunity (triggered TXOP) in a Wireless Local Area Network (WLAN) system.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a wireless LAN system according to an aspect of the present disclosure may comprise: receiving, from an access point (AP), a first aggregated-MAC protocol data unit (A-MPDU) including data to be transmitted to a second STA; transmitting, to the AP, an acknowledgment (ACK) frame for the first A-MPDU, and transmitting, to the second STA, a second A-MPDU including the data. Herein, the ACK frame may include ACK information indicating whether to check at least one MAC header included in the first A-MPDU, and the ACK information may be based on an ACK policy indicated by an ACK policy related field and at least one other field included in the first A-MPDU.

A method performed by an access point (AP) in a wireless LAN system according to an additional aspect of the present disclosure may comprise: transmitting, to a first station (STA), an aggregated-MAC protocol data unit (A-MPDU) including data to be transmitted to a second STA; and receiving, from the first STA, an acknowledgment (ACK) frame for the A-MPDU. Herein, the ACK frame may include ACK information indicating whether to check at least one MAC header included in the A-MPDU, and the ACK information may be based on an ACK policy indicated by an ACK policy-related field and at least one other field included in the A-MPDU.

### [Technical Effects]

According to the present disclosure, a method and device for performing relay transmission at a triggered transmission opportunity (triggered TXOP) in a wireless local area network (WLAN) system may be provided.

According to the present disclosure, the effects of range extension and throughput improvement may be provided through a relay method in a wireless LAN system.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram illsutrating an exemplary format of a trigger frame to which the present disclosure may be applied.
FIG. 9 is a diagram for explaining an example of a triggered TXOP sharing procedure to which the present disclosure may be applied.
FIG. 10 illustrates an example of a relay transmission procedure according to an embodiment of the present disclosure.
FIG. 11 illustrates another example of a relay transmission procedure according to an embodiment of the present disclosure.
FIG. 12 illustrates an operation flow chart by a first STA according to an embodiment of the present disclosure.
FIG. 13 illustrates an operation flow chart by an AP according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

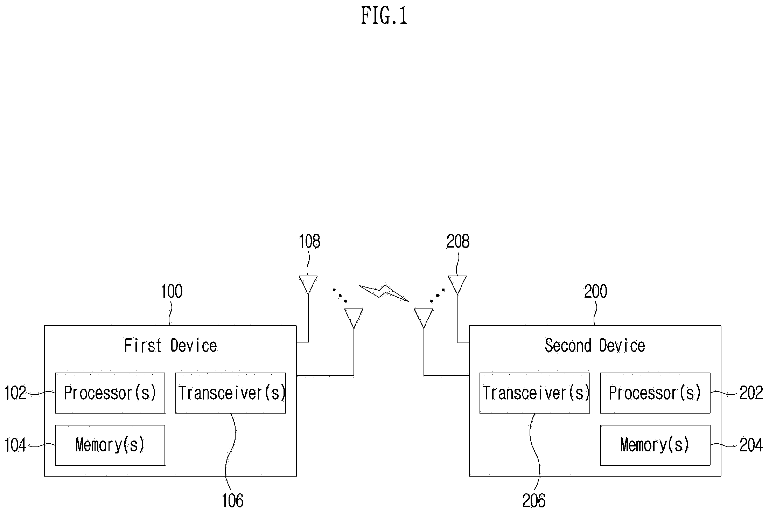

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11 a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

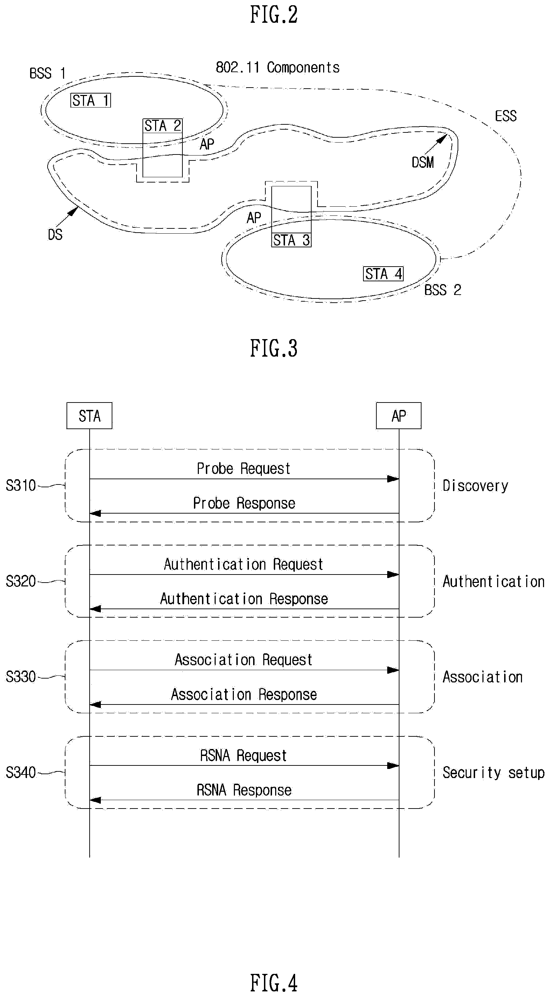

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

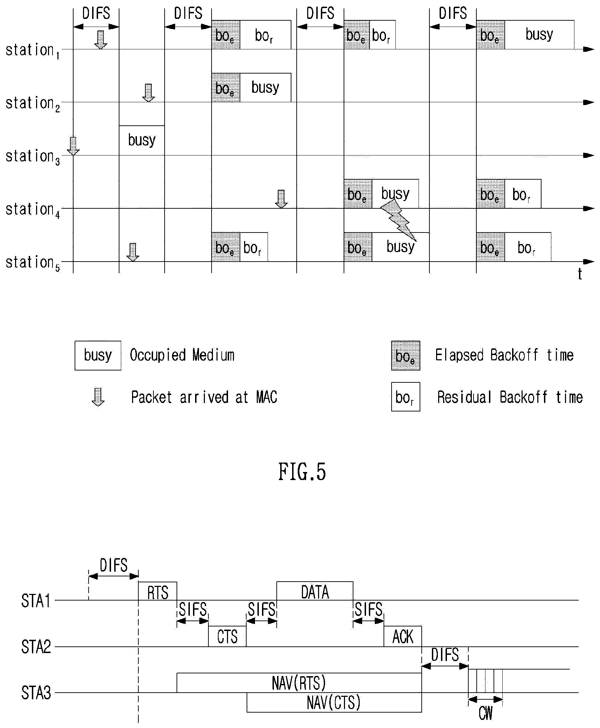

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

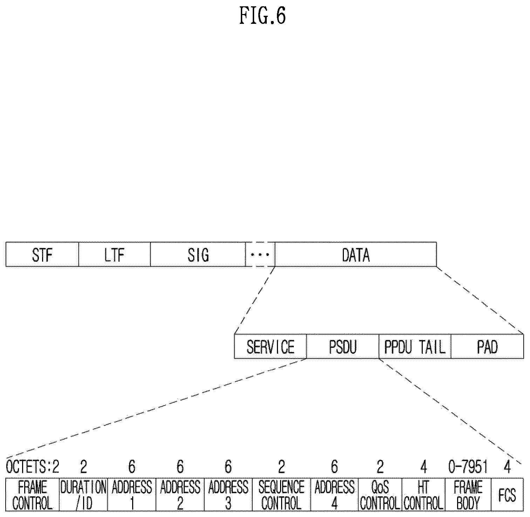

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

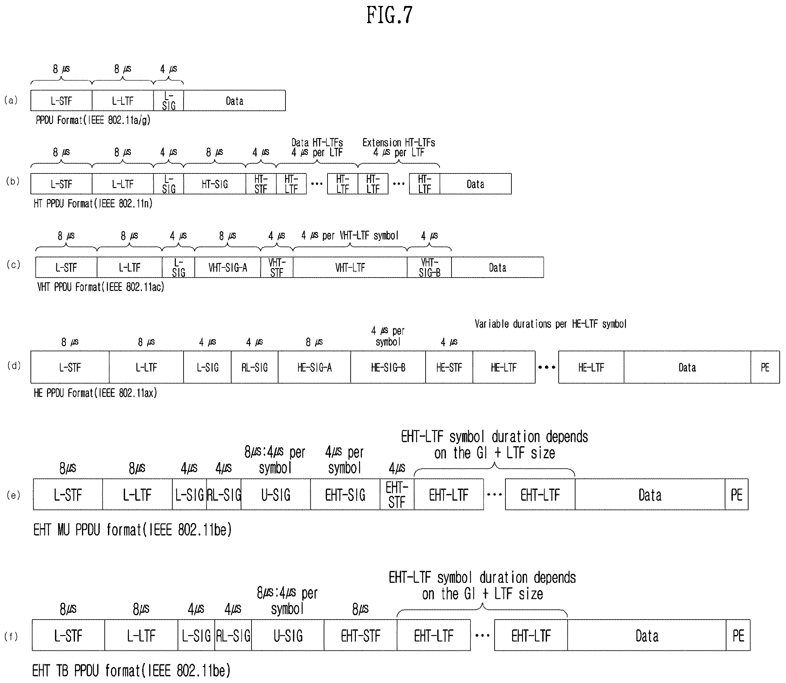

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

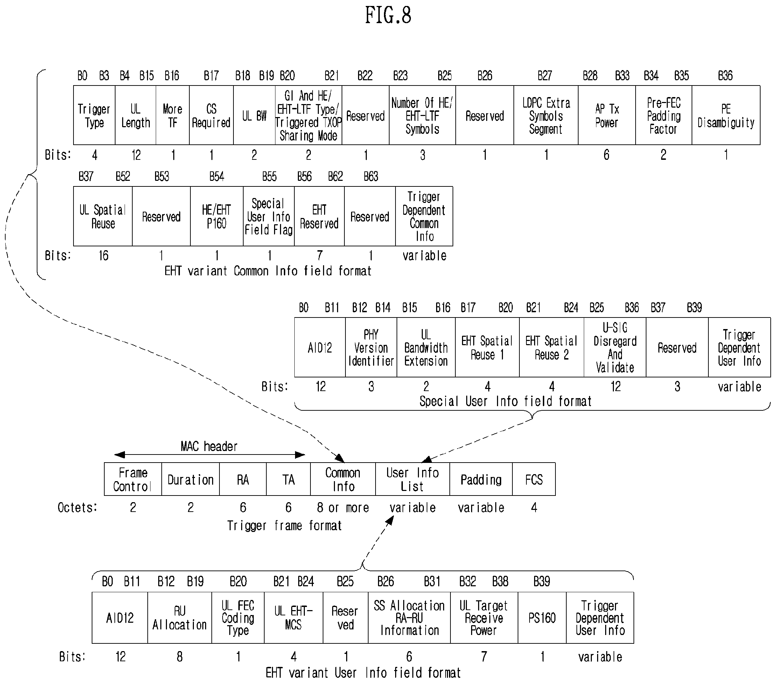

FIG. 8 is a diagram illsutrating an exemplary format of a trigger frame to which the present disclosure may be applied.

A trigger frame may allocate resources for one or more TB PPDU transmissions and may solicit TB PPDU transmissions. The trigger frame may also include other information required by an STA transmitting a TB PPDU in response thereto. The trigger frame may include common info and user info list fields in the frame body.

The common info field may include information that is common to one or more TB PPDU transmissions requested by a trigger frame, such as trigger type, UL length, presence of a subsequent trigger frame (e.g., More TF), presence of channel sensing (CS) required, UL BW (bandwidth), etc. Fig. 8 exemplarily shows an EHT variant common info field format.

The trigger type subfield of 4 bits may have values from 0 to 15. Among them, the values 0, 1, 2, 3, 4, 5, 6, and 7 of the trigger type subfield are defined to correspond to basic, Beamforming Report Poll (BFRP), multi user-block acknowledgement request (MU-BAR), multi user-request to send (MU-RTS), Buffer Status Report Poll (BSRP), groupcast with retries (GCR) MU-BAR, Bandwidth Query Report Poll (BQRP), and NDP Feedback Report Poll (NFRP), respectively, and the values 8 to 15 are defined as reserved.

Among the common info, the trigger dependent common info subfield may include information that is selectively included based on the trigger type.

A special user info field may be included in the trigger frame. The special user info field does not contain user-specific information, but rather contains extended common information not provided in the common info field.

The user info list contains zero or more user info fields. Fig. 8 exemplarily illustrates an EHT variant user info field format.

The AID12 subfield basically indicates that it is a user info field for an STA having the corresponding AID. In addition, if the AID12 field has a pre-determined specific value, it may be utilized for other purposes, such as allocating a random access (RA)-RU, or being configured in the form of a special user info field. The special user info field is a user info field that does not include user-specific information but includes extended common information that is not provided in the common info field. For example, the special user info field may be identified by the AID12 value of 2007, and the special user info field flag subfield in the common info field may indicate whether the special user info field is included.

The RU allocation subfield may indicate the size and location of RU/MRU. For this purpose, the RU allocation subfield may be interpreted together with the PS160 (primary/secondary 160MHz) subfield of the user info field, the UL BW subfield of the common info field, etc.

### Relay execution procedure based on shared transmission opportunity (TXOP) triggered

The triggered TXOP sharing procedure may allow an AP to allocate a portion of its TXOP to one associated non-AP STA for transmitting one or more non-TB PPDUs.

A TXOP may correspond to a time duration during which a particular QoS STA (e.g., an AP STA and/or a non-AP STA) has the right to initiate a frame exchange sequence over the wireless medium (WM). For example, a TXOP may be defined by a start time and a maximum duration.

When a TXOP sharing mode subfield is defined in an MU-RTS frame in relation to the triggered TXOP sharing mode and the value of the subfield is not 0, the frame may be referred to as an MU-RTS TXOP sharing (TXS) trigger frame.

For example, the TXOP sharing mode subfield may be encoded as follows.

If the value of the TXOP sharing mode subfield of the MU-RTS frame is 0, it corresponds to an MU-RTS that does not initiate the MU-RTS TXOP sharing procedure.

If the value of the TXOP sharing mode subfield of the MU-RTS frame is 1, it corresponds to an MU-RTS that initiates an MU-RTS TXOP sharing procedure in which the scheduled STA may only transmit MPDU(s) addressed to its associated AP.

If the value of the TXOP sharing mode subfield of the MU-RTS frame is 2, it corresponds to an MU-RTS that initiates an MU-RTS TXOP sharing procedure that enables the scheduled STA to transmit MPDU(s) addressed to its associated AP or addressed to another STA.

The value 3 of the TXOP sharing mode subfield of the MU-RTS frame may be defined as a reserved value.

Specifically, according to the triggered TXOP sharing mode 1, the AP may transmit an MU-RTS TXS trigger frame to allocate time for the STA to transmit a non-TB PPDU to the AP, and the STA may respond thereto.

According to the triggered TXOP sharing mode 2, an AP may transmit an MU-RTS TXS trigger frame to allocate time for an STA to transmit a non-TB PPDU to other STA(s) or the AP, and the STA may respond to it. In the triggered TXOP sharing mode 2, a transmission by an STA to other STA(s) may be referred to as a peer-to-peer (P2P) transmission.

An STA that uses information from a received MU-RTS TXS trigger frame as the most recent basis for its network allocation vector (NAV) update shall not reset its NAV after the NAV timeout timer expires unless it receives a CF-End frame that satisfies the conditions for TXOP truncation.

NAV is maintained by each STA and is an indicator of a time period during which no transmission on the wireless medium (WM) is initiated by the STA, regardless of whether the clear channel assessment (CCA) function of the STA senses that the WM is busy. For example, an expected channel occupancy time may be indicated through the duration information in the frames (e.g., RTS/CTS frames) exchanged between the transmitting STA and the receiving STA, and the remaining STAs (e.g., third-party STAs) other than the transmitting STA and the receiving STA may set a NAV timer corresponding to the indicated time period and may not perform transmission on the WM until the value of the NAV timer expires (or becomes 0).

After transmitting a CTS frame requested by an MU-RTS TXS trigger frame received from an AP to which an STA is associated, the STA may ignore a NAV set by the AP within the time allocation signaled in the MU-RTS TXS trigger frame. That is, if a NAV is set, the wireless medium is regarded as busy or transmission is not initiated, and therefore, in order to allow transmission of an STA that has been allocated/shared a TXOP of the AP in the triggered TXOP sharing procedure, the STA may ignore the NAV set by the AP.

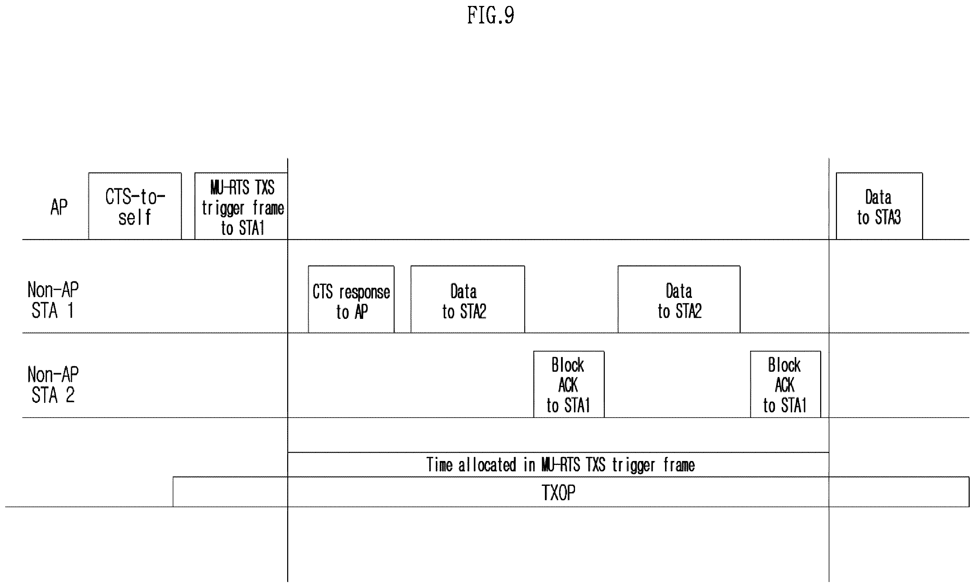

FIG. 9 is a diagram for explaining an example of a triggered TXOP sharing procedure to which the present disclosure may be applied.

The example of Fig. 9 corresponds to an example of triggered TXOP sharing mode 2. That is, it is assumed that the value of the TXOP sharing mode subfield of the MU-RTS TXS trigger frame transmitted by the AP to the non-AP STA1 is set to 2.

Here, the MU-RTS TXS trigger frame transmitted by the AP to the non-AP STA1 may include time allocation information.

For example, the user info field format of the MU-RTS TXS trigger frame may include an AID12 subfield, an RU allocation subfield, an allocation duration subfield, a PS160 subfield, and a reserved bit.

Here, the AID12 subfield corresponds to the identification information of the STA, and the allocation duration subfield may indicate a time duration allocated to the corresponding STA. At this time, the corresponding time duration may be indicated in units of 16us. In this regard, in terms of STA1 (i.e., non-AP STA), the corresponding time duration may be applied from the time when an indication primitive of the physical layer (e.g., PHY-RXEND.indication primitive) for a PPDU including an MU-RTS TXS trigger frame is generated.

STA1 may transmit a CTS frame in response to the MU-RTS TXS trigger frame from the AP, and transmit data to STA2 (i.e., P2P transmission) and receive a block ACK during the time allocated by the MU-RTS TXS trigger frame (which corresponds to a part of the TXOP of the AP). When the time allocated by the MU-RTS TXS trigger frame expires (e.g., after PIFS from the expiration of the allocated time), the AP may perform transmission (e.g., data transmission to another STA, STA3) during its TXOP. Although not illustrated in FIG. 9, STA1 may also transmit a frame to the AP during the time allocated by the MU-RTS TXS trigger frame.

When the distance between the AP and the STA is long, frame transmission and reception may not be performed properly due to a low signal-to-noise ratio (SNR) and/or throughput caused by higher propagation loss.

To solve these problems, various methods such as changing the PPDU format to support a long range may be used, and in particular, a method of using relay STA(s) when performing frame transmission and reception between STAs may be considered.

For example, when an AP needs to transmit a DL frame to a target STA located far away, the AP may first transmit the frame to another STA located at an appropriate distance, and the STA that receives the frame may be configured to retransmit the frame to the target STA.

In the present disclosure, a specific protocol/signaling method for relay transmission as described above is proposed through various embodiments. In particular, in the present disclosure, a method for configuring and indicating an ACK policy that enables fast relay transmission is proposed through various embodiments.

In this regard, when an AP transmits a frame to a target STA, since STA-to-STA frame transmission is required when using a relay STA, the triggered TXOP sharing method described above in this disclosure may be utilized. That is, the present disclosure proposes a relay transmission method utilizing triggered TXOP sharing and a method for configuring/indicating an ACK policy related thereto.

In connection with the description in the present disclosure, an STA performing relay is referred to as a relay STA, and the STA may include an AP STA or a non-AP STA.

### Embodiment 1

The present embodiment relates to a method for performing relay transmission based on a triggered TXOP Sharing Mode and a method for configuring/indicating an ACK policy related thereto.

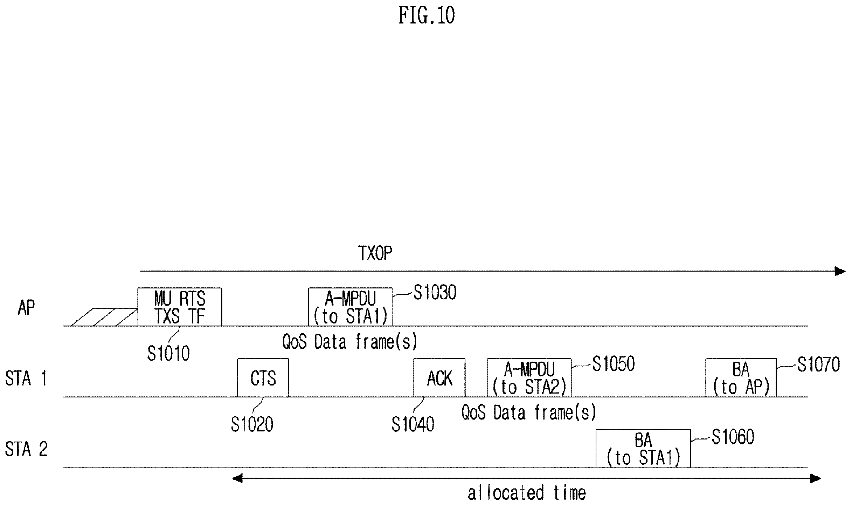

FIG. 10 illustrates an example of a relay transmission procedure according to an embodiment of the present disclosure.

Referring to FIG. 10, when performing relay transmission using an MU-RTS TXS trigger frame (TF), the AP needs to transmit a MU-RTS TXS trigger frame and a data frame.

In Fig. 10, STA 1 corresponds to a relay STA, and STA 2 corresponds to a target STA to which the AP will ultimately transmit a frame.

For example, the AP may allocate a time (e.g., a specific time period) during which STA 1 may transmit to STA 2 via the MU-RTS TXS trigger frame (step S1010).

In this regard, a new mode may be indicated via the Triggered TXOP Sharing Mode subfield in the MU-RTS TXS trigger frame. Specifically, a value previously reserved in the subfield (e.g., a value of 3) may be newly defined to indicate a mode for initiating an MU-RTS TXOP sharing procedure for relay transmission.

Additionally or alternatively, more bits may be required to indicate a combination of modes, in which case reserved bits of the Common Info field of the MU-RTS TXS trigger frame may be additionally utilized. For example, a mode that allows MPDU transmission to AP as well, corresponding to a value of 1 in the TXOP shared mode subfield triggered along with the corresponding relay transmission, a mode that allows P2P transmission, corresponding to a value of 2 in the TXOP shared mode subfield triggered along with the corresponding relay transmission, and/or a mode that allows all modes along with the corresponding relay transmission may be additionally defined/indicated. Here, one or more of the aforementioned added modes may exist.

If a relay STA, i.e., STA 1, receives the MU-RTS TXS trigger frame transmitted by the AP successfully (i.e., properly, correctly), the STA 1 may respond to the AP via a CTS frame (step S1020).

The AP that receives the CTS frame may transmit frame(s) (e.g., QoS data frame(s)) to be transmitted to STA 2 to STA 1 corresponding to the relay STA (step S1030). At this time, the frame(s) may be transmitted and received in an A-MPDU format consisting of one or more MPDUs.

In this regard, the field settings in the MAC header of the corresponding frame may be as follows. Specifically, the To DS field and the From DS field, a number of address fields, and the ACK policy related fields in the QoS Control field may be set according to the method described below.

Here, the To DS field and the From DS field included in the frame control field in the MAC header may be included in the frame control field in the MAC header. For example, both the To DS field and the From DS field being set to 0 (i.e., [0, 0]) may be related to transmission and reception between STAs within an IBSS or a single BSS, the To DS field and the From DS field being set to [0, 1] may be related to a data frame (i.e., DL transmission and reception) transmitted from an AP to a wireless STA, the To DS field and the From DS field being set to [1, 0] may be related to a data frame (i.e., UL transmission and reception) transmitted from a wireless STA to an AP, and the To DS field and the From DS field being set to [1, 1] may be related to transmission and reception through a wireless bridge (e.g., mesh-based transmission).

First, in relation to the relay transmission operation proposed in the present disclosure, a method of setting values for the To DS field, the From DS field, and a plurality of address fields is described.

For example, the To DS field may be set to a value of 0, and the From DS field may be set to a value of 1.

At this time, the first address field (e.g., AD1 field) may be set to the MAC address of STA 1 (i.e., relay STA) as a receiver address (RA), and the second address field (e.g., AD2 field) may be set to the MAC address of the AP (e.g., BSSID, etc.) as a transmitter address (TA).

In this regard, if only the fourth address field (e.g., AD4 field) is set, the source address (SA) of the third address field (e.g., AD3 field) is set as before, and the MAC address of STA 2 (i.e., target STA) may be set in the fourth address field. Here, the source address (SA) may correspond to the MAC address (e.g., BSSID) of the AP. Additionally or alternatively, if both the third address field and the fourth address field are set, the third address field may be set to the MAC address (e.g., BSSID) of the AP as the source address (SA), and the fourth address field may be set to the MAC address (e.g., BSSID) of the STA 2 as the destination address (DA). Conversely, the third address field may be set to the MAC address of STA 2 as the destination address (DA), and the fourth address field may be set to the MAC address (e.g., BSSID) of the AP as the source address (SA).

For another example, the To DS field may be set to the value 1 and the From DS field may be set to the value 1.

At this time, the first address field (e.g., AD1 field) may be set to the MAC address of STA 1 (i.e., relay STA) as a receiver address (RA), the second address field (e.g., AD2 field) may be set to the MAC address of AP (e.g., BSSID, etc.) as a transmitter address (TA), the third address field (e.g., AD3 field) may be set to the MAC address of STA 2 as a destination address (DA), and the fourth address field (e.g., AD4 field) may be set to the MAC address of AP (e.g., BSSID) as a source address (SA).

Next, in relation to the relay transmission operation proposed in the present disclosure, the setting of the ACK policy related field in the QoS Control field is described.

Basically, the ACK policy described below may be an ACK policy for STA 1, i.e., a relay STA. At this time, a case in which STA 1 checks (e.g., decodes) only the MAC header of the MPDU may be considered.

That is, instead of responding with a block-ACK by checking the frame check sequence (FCS) for the frame body, STA 1 may inform the AP that it has checked the MAC header of at least one MPDU through ACK information (e.g., general ACK). Here, at least one MPDU may be included in the A-MPDU transmitted by the AP to STA 1.

In this regard, as mentioned above, the ACK policy for transmitting ACK, i.e., ACK information, for an A-MPDU transmitted for one STA, as proposed in the present disclosure, is not defined in the existing wireless LAN system. Therefore, such an ACK policy needs to be newly defined, and for this purpose, the following methods (hereinafter, Method 1 and Method 2) may be considered.

### (Method 1)

The ACK policy related field included in the MAC header (e.g., ACK policy indicator field) consists of 2 bits. Therefore, a method may be considered to interpret the ACK policy differently depending on the field settings for the aforementioned To DS field, From DS field, and multiple address fields by using existing/defined values (e.g., 01, 00) to indicate the ACK policy.

That is, by considering the values of the ACK policy related fields together with the values of other field(s) in the MAC header (e.g., To DS field, From DS field, address field, etc.), STA 1 may be configured/defined to interpret the ACK policy indicated by the AP differently from the existing case.

Accordingly, there are field settings for the To DS field and the From DS field and a number of address fields as described above, and when an ACK policy related field is set to a specific value, the indicated ACK policy can be interpreted to mean that the MAC header of at least one MPDU has been verified for the received A-MPDU.

### (Method 2)

A method may be considered of setting the ACK policy related field to a value (e.g., 00) indicating an implicit block-ack request (implicit BAR) and using the A-Control field to indicate the ACK policy as described above. For example, in order to indicate the ACK policy, a specific subfield (e.g., a 2-bit Relay TX Information (RXTI) control subfield) using a new Control ID of the A-Control field may be defined.

That is, the ACK policy related field indicates an implicit BAR, and by using the A-Control field described later, an indication may be performed for the corresponding A-MPDU with the same meaning, that is, to transmit an ACK when the MAC header of at least one MPDU for the received A-MPDU is verified. In this regard, a 1-bit field may be used to indicate the meaning.

Additionally or alternatively, in addition to the information for the aforementioned ACK policy, the AP may inform STA 1 of one or more additional ACK policy information as follows.
- ACK policy related to ACK information that STA 2 will transmit to STA 1 when STA 1, a relay STA, transmits to STA 2, a target STA
- ACK policy related to ACK information that STA 1 will transmit to AP after STA 1, a relay STA, receives ACK information from STA 2, a target STA

First, a method for informing ACK policy related to the ACK information to be delivered by STA 2 to STA 1 is described.

For example, some of the fields that are not necessarily required in the MAC header may be utilized to indicate the corresponding ACK policy. As a specific example, two bits among bits 8 to 15 of the QoS Control field in the MAC header may be utilized to indicate an existing ACK policy (e.g., 2-bit information). In particular, if an ACK policy that may only be used in relay transmission may be selected, only 1 bit may be utilized. As an example, the 1 bit may be set to indicate implicit BAR or block-ACK. Through this, STA 1, which recognizes that it is relay transmission through the triggered TXOP sharing (TXS) mode subfield, the address field, etc., may interpret the corresponding bits 8 to 15 differently from the existing case. In this case, in terms of implementation, a change in the MAC header processing method of the existing STA may be required.

For another example, a subfield may be defined using a new Control ID of the A-Control field as described above (e.g., a 2-bit RXTI control subfield). Similarly, the subfield may indicate an ACK policy using 2 bits (e.g., a 2-bit information). In particular, only 1 bit may be used if an ACK policy that may only be used in relay transmission may be selected. As an example, the 1 bit may be set to indicate an implicit BAR or block-ACK.

Next, a method for informing ACK policy related to the ACK information to be transmitted by STA 1 to AP is described.

For example, some of the fields that are not necessarily required in the MAC header may be utilized to indicate the corresponding ACK policy. As a specific example, two bits among bits 8 to 15 of the QoS Control field in the MAC header may be utilized to indicate an existing ACK policy (e.g., 2-bit information). In particular, if an ACK policy that may be used only in relay transmission may be selected, only 1 bit may be utilized. As an example, the 1 bit may be set to indicate an implicit BAR or block-ACK. Here, the implicit BAR may mean that STA 1, which is a relay STA, transmits a block-ACK (BA) to the AP after SIFS after receiving a block-ACK (BA) from STA 2. Through this, STA 1, which recognizes that it is a relay transmission through the triggered TXOP sharing (TXS) mode subfield, address field, etc., may interpret bits 8 to 15 differently from the existing case. In this case, from an implementation perspective, a change in the MAC header processing method of the existing STA may be required.

For another example, a subfield may be defined using a new Control ID of the A-Control field as described above (e.g., a 2-bit RXTI control subfield). Similarly, the subfield may indicate an ACK policy using 2 bits (e.g., 2-bit information). In particular, only 1 bit may be used if an ACK policy that may be used only in relay transmission may be selected. As an example, the 1 bit may be set to indicate an implicit BAR or a block-ACK. Here, the implicit BAR may mean that STA 1, which is a relay STA, transmits a block-ACK (BA) to the AP after SIFS after receiving a block-ACK (BA) from STA 2.

STA 1, which has received an A-MPDU including QoS data frame(s) from an AP, may transmit an ACK to the AP if it has checked (e.g., decoded) at least one MAC header (step S1040).

Through this step, the AP may recognize that STA 1 may transmit at least one frame to be transmitted to STA 2. This step may be omitted in terms of reducing protocol overhead.

STA 1, which has transmitted an ACK to AP, may transmit data frame(s) (e.g., QoS data frame(s)) successfully received from AP to STA 2 corresponding to the target STA (step S1050). At this time, the frame(s) may be transmitted and received in the form of A-MPDU consisting of one or more MPDUs.

In this regard, the field settings in the MAC header of the corresponding frame (MAC header field settings) may be as follows.

For example, the To DS field may be set to a value of 0, and the From DS field may be set to a value of 0. Alternatively, the settings of the To DS field and the From DS field as in the above-described step S1030 may be applied.

At this time, with respect to the plurality of address fields, the first address field (e.g., AD1 field) may be set as a receiver address (RA) to the MAC address of STA 2 (i.e., target STA), and the second address field (e.g., AD2 field) may be set as a transmitter address (TA) to the MAC address of STA 1. In this regard, the source address (SA) may be set as a MAC address of the AP (e.g., BSSID), and the destination address (DA) may be set as an address of STA 2. At this time, the source address (SA) and the destination address (DA) may be set as a third address field (e.g., AD3 field) and a fourth address field (e.g., AD4 field), respectively, and the opposite case is also possible.

Additionally, with respect to the setting of the ACK policy related field in the QoS control field, basically, the corresponding ACK policy may be an ACK policy for STA 2, i.e., the target STA. Accordingly, it may be set to use the ACK policy indicated when the AP transmits to STA 1, or it may always be set to implicit BAR.

STA 2 may transmit a block-ACK frame to STA 1 according to the aforementioned ACK policy (step S1060).

Finally, STA 1, which has received a block-ACK frame from STA 2, may transmit a block-ACK frame including the block-ACK information received from STA 2 to the AP (step S1070).

### Embodiment 2

This embodiment is for a method for reducing signaling overhead in the relay procedure according to the aforementioned embodiment 1.

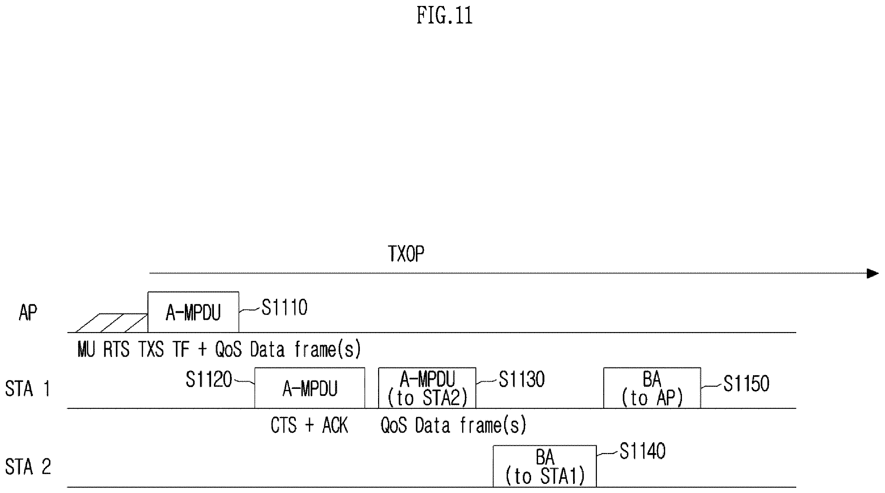

FIG. 11 illustrates another example of a relay transmission procedure according to an embodiment of the present disclosure.

Referring to FIG. 11, in the case of the relay procedure in Example 1, since multiple frames need to be exchanged, a method for reducing overhead is required. In this regard, a method of transmitting multiple frames in the form of cascading in A-MPDU may be applied.

In Fig. 11, STA 1 corresponds to a relay STA, and STA 2 corresponds to a target STA to which the AP will ultimately transmit a frame.

For example, the AP may include an MU-RTS TXS trigger frame that allocates a time (e.g., a specific time period) during which STA 1 can transmit to STA 2 and frame(s) (e.g., QoS data frame(s)) to be transmitted to STA 2 in an A-MPDU and transmit it to STA 1 (step S1110).

In this regard, for mode setting related to the MU-RTS TXS trigger frame (i.e., triggered TXOP shared mode), the method described in step S1010 in embodiment 1 may be applied. Additionally, for setting for the MAC header field of the frame to be transmitted to STA 2, the method described in step S1030 in embodiment 1 may be applied.

When a relay STA, i.e. STA 1, successfully receives the MU-RTS TXS trigger frame transmitted by the AP and the frame(s) to be transmitted to STA 2, it may respond to the AP by including a CTS frame and an ACK frame in the A-MPDU (step S1120).

In this regard, as in the description of the ACK policy of step S1030 in embodiment 1, the corresponding ACK frame may inform STA 2 that it has confirmed the MAC header of at least one MPDU corresponding to the frame(s) to be transmitted.

STA 1 may transmit frame(s) (e.g., QoS data frame(s)) successfully received from AP to STA 2 corresponding to the target STA (step S1130). At this time, the frame(s) may be transmitted and received in the form of A-MPDU consisting of one or more MPDUs.

STA 2 may transmit a block-ACK frame to STA 1 according to an ACK policy (step S1140).

Finally, STA 1, which has received a block-ACK frame from STA 2, may transmit a block-ACK frame including block-ACK information received from STA 2 to AP (step S1150).

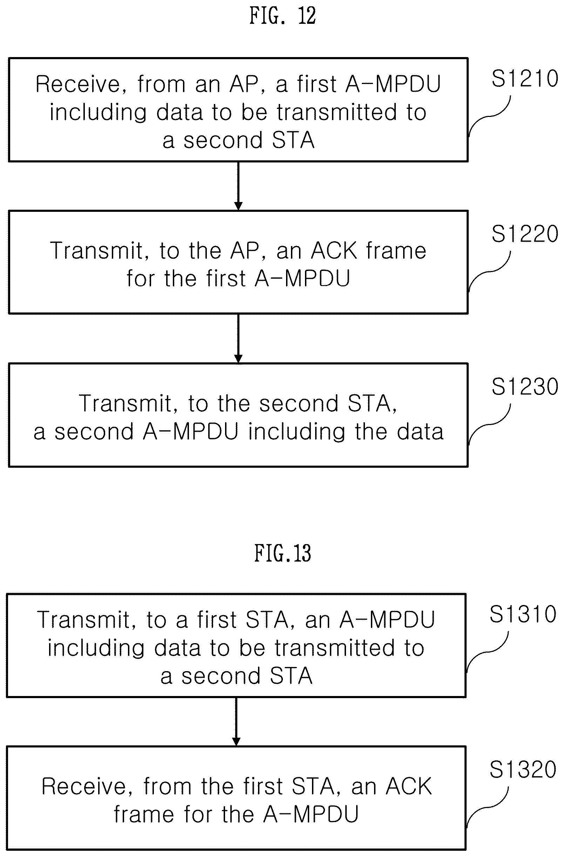

Hereinafter, the operation of the STA according to the embodiment of the present disclosure described above will be described with reference to FIGS. 12 and 13.

That is, the examples of FIGS. 12 and 13 may correspond to some of the various examples of the present disclosure. For example, in FIGS. 12 and 13, the first STA may correspond to a relay STA, and the second STA may correspond to a target STA (i.e., an end-STA) of the relay transmission.

FIG. 12 illustrates an operation flow chart by a first STA according to an embodiment of the present disclosure.

A first STA may receive a first A-MPDU including data to be transmitted to a second STA from an access point (AP) (S1210).

The first STA may transmit an ACK frame for the first A-MPDU to the AP (S1220).

In this regard, the ACK frame may include ACK information indicating whether at least one MAC header included in the first A-MPDU is checked. For example, if at least one MAC header is checked, the first STA may transmit an ACK to the AP.

At this time, the ACK information may be based on an ACK policy related field (e.g., an ACK policy indicator field) included in the MAC header in the first A-MPDU and an ACK policy indicated by at least one other field.

For example, at least one other field may include a To DS field, a From DS field, and multiple address fields included in the MAC header.

In this regard, when the To DS field is set to a value of 0 and the From DS field is set to a value of 1, the plurality of address fields may include one or more of a first address field (e.g., an AD1 field), a second address field (e.g., an AD2 field), a third address field (e.g., an AD3 field), or a fourth address field (e.g., an AD4 field). For example, three address fields or four address fields may be set/included in one MAC header. Here, the first address field may be set as identification information for the first STA as a receiving address (RA), the second address field may be set as identification information for the AP as a transmitting address (TA), the third address field may be set as identification information for the second STA as a destination address (DA), and the fourth address field may be set as identification information for the AP as a source address (SA).

Additionally or alternatively, when the To DS field is set to a value of 1 and the From DS field is set to a value of 1, the plurality of address fields may include a first address field (e.g., an AD1 field), a second address field (e.g., an AD2 field), a third address field (e.g., an AD3 field), and a fourth address field (e.g., an AD4 field). Here, the first address field may be set as identification information for the first STA as a receiving address (RA), the second address field may be set as identification information for the AP as a transmitting address (TA), the third address field may be set as identification information for the second STA as a destination address (DA), and the fourth address field may be set as identification information for the AP as a source address (SA).

For another example, at least one other field may include specific information based on an aggregated-Control (A-Control) field included in the first A-MPDU, wherein the specific information may correspond to relay transmission related control information configured using a specific control identifier (control ID) of the aggregated-Control field.

Subsequently, the first STA may transmit a second A-MPDU including the data in step S1210 to the second STA (S1230).

In this regard, the first A-MPDU in step S1210 may include at least one of first information indicating an ACK policy related to ACK information for the second A-MPDU transmission or second information indicating an ACK policy related to ACK information for reception of an ACK frame for the second A-MPDU transmission. Here, the first information may be related to an ACK policy for ACK transmission from the second STA to the first STA, and the second information may be related to an ACK policy for ACK transmission from the first STA to the AP after the first STA receives ACK information from the second STA.

For example, the first information and the second information may each be composed of 1-bit information or 2-bit information in bits 8 to 15 of the QoS control field included in the first A-MPDU, or may be composed of a relay-related subfield based on a specific control identifier of the aggregated-control (A-control) field included in the first A-MPDU. That is, the first information may be composed of 1 bit or 2 bits, and the second information may be composed of 1 bit or 2 bits.

For example, if the first information consists of 1 bit, the ACK policy indicated by the first information may correspond to either an implicit block-ack request (implicit BAR) or a block-ACK. Additionally or alternatively, if the second information consists of 1 bit, the ACK policy indicated by the second information may correspond to either an implicit BAR or a block-ACK. Here, the implicit BAR may correspond to that STA 1, which is a relay STA, transmits a block-ACK (BA) to the AP after SIFS after receiving a block-ACK (BA) from STA 2.

Additionally, prior to step S1210, the first STA may receive a trigger frame from the AP, which includes information indicating a mode for relay transmission within a triggered transmission opportunity (TXOP). In this case, the reception of the first A-MPDU and the transmission of the second A-MPDU described above may be performed within a time interval allocated based on the trigger frame. Additionally, the first STA may transmit a CTS frame to the AP in response to the reception of the trigger frame.

Additionally, after step S1230, the first STA may receive a first response frame including block-ACK information for the second A-MPDU from the second STA. The first STA may transmit a second response frame including the block-ACK information received from the second STA to the AP.

The method performed by the first STA described in the example of FIG. 12 may be performed by the first device (100) of FIG. 1. For example, one or more processors (102) of the first device (100) of FIG. 1 may be configured to receive, through one or more transceivers (106), a first A-MPDU including data to be transmitted from an AP to a second STA, transmit an ACK frame for the first A-MPDU to the AP, and transmit a second A-MPDU including the corresponding data to the second STA.

For example, one or more processors (102) of the first device (100) may be configured to decode the received first A-MPDU to determine an ACK policy for configuring ACK information therefor, and determine ACK information to be transmitted to the AP based on the ACK policy. Thereafter, one or more processors (102) of the first device (100) may be configured to encode a second A-MPDU including data included in the received first A-MPDU, and transmit the same to the second STA.

Furthermore, one or more memories (104) of the first device (100) may store instructions for performing the method described in the example of FIG. 12 or the examples described above when executed by one or more processors (102).

FIG. 13 illustrates an operation flow chart by an AP according to an embodiment of the present disclosure.

The AP may transmit, to the first STA, an A-MPDU including data to be transmitted to the second STA (S1310). Thereafter, the AP may receive an ACK frame for the corresponding A-MPDU from the first STA.

In this regard, the ACK frame may include ACK information indicating whether to check at least one MAC header included in the A-MPDU. Here, the ACK information may be based on an ACK policy indicated by an ACK policy related field (e.g., an ACK policy indicator field) included in the A-MPDU and at least one other field.

The detailed description of the ACK information in Fig. 13, the fields in the MAC header included in the A-MPDU, the various fields/bit configurations related to the ACK policy, additional procedures, etc. are the same as those described in the example of Fig. 12, so redundant descriptions are omitted.

The method performed by the AP described in the example of FIG. 13 may be performed by the second device (200) of FIG. 1. For example, one or more processors (202) of the second device (200) of FIG. 1 may be configured to transmit, to the first STA, an A-MPDU including data to be transmitted to the second STA through one or more transceivers (206), and to receive an ACK frame for the A-MPDU from the first STA.

For example, one or more processors (202) of the second device (200) may be configured to configure a MAC header by encoding an ACK policy related field and at least one other field to indicate an ACK policy for the A-MPDU when configuring the A-MPDU.

Furthermore, one or more memories (204) of the second device (200) may store instructions for performing the method described in the example of FIG. 13 or the examples described above when executed by one or more processors (202).

In the existing wireless LAN system, the signaling/protocol for supporting relay transmission was not clearly defined. Accordingly, there were frequent cases where signal transmission and reception for a distant STA were not successfully performed. In order to solve this problem, the present disclosure proposes a method for signaling/protocol for supporting relay transmission. In particular, in the case of the proposed method in the present disclosure, by defining a new ACK policy for fast ACK transmission in relation to relay transmission based on the A-MPDU structure, a new effect can be achieved in which relay transmission with improved reliability and speed can be performed.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first station (STA) in a wireless LAN system, the method comprising:
receiving, from an access point (AP), a first aggregated-MAC protocol data unit (A-MPDU) including data to be transmitted to a second STA;
transmitting, to the AP, an acknowledgment (ACK) frame for the first A-MPDU, and
transmitting, to the second STA, a second A-MPDU including the data,
wherein the ACK frame includes ACK information indicating whether to check at least one MAC header included in the first A-MPDU, and
wherein the ACK information is based on an ACK policy indicated by an ACK policy related field and at least one other field included in the first A-MPDU.

2. The method of claim 1, wherein:
the at least one other field includes a To DS field, a From DS field, and a plurality of address fields included in the at least one MAC header.

3. The method of claim 2, wherein:
based on the To DS field being set to a value of 0 and the From DS field being set to a value of 1,
the plurality of address fields include at least one of a first address field, a second address field, a third address field, or a fourth address field,
the first address field is set as a receiver address (RA) with identification information for the first STA,
the second address field is set as a transmitter address (TA) with identification information for the AP,
the third address field is set as a destination address (DA) with identification information for the second STA, and
the fourth address field is set as a source address (SA) with identification information for the AP.

4. The method of claim 2, wherein:
based on the To DS field being set to a value of 1 and the From DS field being set to a value of 1,
the plurality of address fields include a first address field, a second address field, a third address field, and a fourth address field,
the first address field is set as a receiving address (RA) with identification information for the first STA,
the second address field is set as a transmitting address (TA) with identification information for the AP,
the third address field is set as a destination address (DA) with identification information for the second STA, and the fourth address field is set as a source address (SA) with identification information for the AP.

5. The method of claim 1, wherein:
the at least one other field includes specific information based on an aggregated-Control (A-Control) field included in the first A-MPDU.

6. The method of claim 5, wherein:
the specific information corresponds to relay transmission related control information configured using a specific control identifier (control ID) of the aggregated-control field.

7. The method of claim 1, wherein:
the first A-MPDU includes at least one of first information indicating an ACK policy related to ACK information for transmission of the second A-MPDU or second information indicating an ACK policy related to ACK information for reception of an ACK frame for transmission of the second A-MPDU.

8. The method of claim 7, wherein:
each of the first information and the second information is constructed with 1-bit information or 2-bit information in bits 8 to 15 of a quality of service (QoS) control field included in the first A-MPDU, or a relay-related subfield based on a specific control identifier of an aggregated-control (A-control) field included in the first A-MPDU.

9. The method of claim 7, wherein:
the first information is composed of 1 bit or 2 bits, the second information is composed of 1 bit or 2 bits,
based on the first information being composed of 1 bit, an ACK policy indicated by the first information corresponds to one of an implicit block-ack request (implicit BAR) or block-ACK, and
based on the second information being composed of 1 bit, an ACK policy indicated by the second information corresponds to one of an implicit BAR or block-ACK.

10. The method of claim 1, further comprising:
receiving, from the AP, a trigger frame including information indicating a mode for relay transmission within a triggered transmission opportunity (TXOP),
wherein a reception of the first A-MPDU and a transmission of the second A-MPDU are performed within a time duration allocated based on the trigger frame.

11. The method of claim 1, further comprising:
receiving, from the second STA, a first response frame including BlockACK information for the second A-MPDU; and
transmitting, to the AP, a second response frame including BlockACK information received from the second STA.

12. The method of claim 1, wherein:
the first STA corresponds to a relay STA in the relay transmission, and
the second STA corresponds to a target STA in the relay transmission.

13. An apparatus for a first station (STA) in a wireless local area network (WLAN) system, the apparatus comprising:
at least one transceiver; and
at least one processor connected to the at least one transceiver,
wherein the at least one processor is configured to:
receive, from an access point (AP), a first aggregated-MAC protocol data unit (A-MPDU) including data to be transmitted to a second STA;
transmit, to the AP, an acknowledgment (ACK) frame for the first A-MPDU; and
transmit, to the second STA, a second A-MPDU including the data,
wherein the ACK frame includes ACK information indicating whether to check at least one MAC header included in the first A-MPDU, and
wherein the ACK information is based on an ACK policy indicated by an ACK policy related field and at least one other field included in the first A-MPDU.

14. A method performed by an access point (AP) in a wireless LAN system, the method comprising:
transmitting, to a first station (STA), an aggregated-MAC protocol data unit (A-MPDU) including data to be transmitted to a second STA; and
receiving, from the first STA, an acknowledgment (ACK) frame for the A-MPDU,
wherein the ACK frame includes ACK information indicating whether to check at least one MAC header included in the A-MPDU, and
wherein the ACK information is based on an ACK policy indicated by an ACK policy-related field and at least one other field included in the A-MPDU.

15. An apparatus for an access point (AP) in a wireless local area network (WLAN) system, the apparatus comprising:
at least one transceiver; and
at least one processor connected to the at least one transceiver,
wherein the at least one processor is configured to:
transmit, to a first station (STA), an aggregated-MAC protocol data unit (A-MPDU) including data to be transmitted to a second STA; and
receive, from the first STA, an acknowledgment (ACK) frame for the A-MPDU,
wherein the ACK frame includes ACK information indicating whether to check at least one MAC header included in the A-MPDU, and
wherein the ACK information is based on an ACK policy indicated by an ACK policy-related field and at least one other field included in the A-MPDU.

16. A processing unit configured to control a station (STA) in a wireless local area network (WLAN) system, the processing unit comprising:
at least one processor; and
at least one computer memory operably connected to the at least one processor, and based on being executed by the at least one processor, storing instructions for performing a method according to any one claim of claims 1 to 12.

17. At least one non-transitory computer-readable medium storing at least one instruction, wherein:
the at least one instruction controls a device to perform a method according to any one claim of claims 1 to 12 in a wireless local area network (WLAN) system by being executed by at least one processor.
